# EUROPÄISCHE PATENTANMELDUNG

(11) **EP 2 361 894 A1**
(43) Veröffentlichungstag der Anmeldung: **31.08.2011**
(21) Anmeldenummer: 11155562.9
(22) Anmeldetag: 23.02.2011
(51) Int. Cl.: C03C 27/06, C03B 23/20, B23K 20/00, C04B 37/00

(54) **Verfahren und Vorrichtung zur Herstellung einer stoffschlüssigen Verbindung unter Einwirkung einer Fliehkraft**

(30) Priorität: 26.02.2010 DE 102010009931
(71) Anmelder: Fachhochschule Jena, 07745 Jena (DE)
(72) Erfinder: Bliedtner, Jens, Prof. Dr., 07745 Jena (DE); Barz, Andreas, Dr., 07751 Golmsdorf (DE); Bürger, Wolfgang, Dr., 99089 Erfurt (DE); Gräfe, Günter, 07774 Camburg (DE); Meyer, Harald, 15741 Bestensee (DE)
(74) Vertreter: Schaller, Renate

(57) **Zusammenfassung**

Die Erfindung betrifft ein Verfahren sowie Vorrichtungen zur Durchführung des Verfahrens zur Herstellung einer stoffschlüssigen Verbindung zwischen mindestens zwei Körpern (3) mit jeweils wenigstens einer Kontaktfläche (4), bei dem die Körper (3) zueinander ausgerichtet und entlang der Kontaktflächen (4) in Kontakt gebracht werden um eine Baugruppe zu bilden und bei einer vorgegebenen Temperatur auf die Kontaktflächen (4) eine senkrecht gerichtete Andruckkraft (F_{A}) einwirkt, wobei das Verfahren dadurch gekennzeichnet ist, dass die miteinander in Kontakt stehenden Körper (3) zueinander fixiert und in einer vorbestimmten Relativlage mit einem senkrechten Achsabstand (8) zu einer ersten Rotationsachse (1) angeordnet werden und dass die Körper (3) mit einer einstellbaren und über eine vorgegebene Prozessdauer vorgegebenen Rotationsgeschwindigkeit um die erste Rotationsachse (1) rotieren, wodurch eine auf die Körper (3) wirkende Fliehkraft (F_{L}) erzeugt wird, die wenigstens anteilig als Andruckkraft (F_{A}) auf die Kontaktflächen (4) wirkt.

## Beschreibung

Die Erfindung betrifft ein Verfahren zum stoffschlüssigen Verbinden von Körpern, wie dies gattungsgemäß aus der DD 129 413 bekannt ist. Die Erfindung betrifft zudem eine Vorrichtung zur Anwendung des erfindungsgemäßen Verfahrens.

Für eine Vielzahl von Anwendungsgebieten besteht die Anforderung, Körper flächig stoffschlüssig zu verschiedensten Baugruppen zu fügen. Dabei sollen die hergestellten Verbindungen haltbar sein und zudem die Eigenschaften der gefügten Körper nicht nachteilig beeinflusst werden. Ferner sollen zunehmend Körper aus zueinander unterschiedlichen, artfremden Materialien miteinander verbunden werden.

Bekannte Verfahren zum stoffschlüssigen Fügen von Körpern zu einer Baugruppe sind beispielsweise Verfahren, bei denen ein Hilfsstoff auf die miteinander zu verbindenden Kontaktflächen der Körper aufgebracht wird, wie dies beim Löten oder Kleben geschieht.

Weiterhin sind verschiedene Verfahren bekannt, bei denen ein Teil des Materials der Körper aufgeschmolzen wird, sich die Schmelzen mischen und eine stoffschlüssige Verbindung hergestellt wird. Das Verschweißen entlang zweier sich berührender Kontaktflächen kann in den gefügten Körpern regelmäßig starke Spannungen hervorrufen, welche die Gebrauchsfähigkeit der entstandenen Baugruppe nachteilig beeinflussen können. Diese Spannungen können nur durch zeit- und kostenintensive Nachbearbeitungen beseitigt oder zumindest reduziert werden.

Alle angeführten Verfahren erfordern das Aufbringen einer im Wesentlichen senkrecht wirkenden Andruckkraft auf die zu verbindenden Kontaktflächen. Die Andruckkraft wird gemäß des Standes der Technik durch den mechanischen Angriff von Vorrichtungen wie Andruckstempeln aufgebracht. Solche Vorrichtungen weisen jedoch den Nachteil auf, dass die Kraftaufbringung nicht homogen erfolgt, sondern vielmehr, insbesondere bei stark geformten Kontaktflächen, lokale Spannungsspitzen in den Körpern und auf den Kontaktflächen erzeugt werden.
Ferner setzen solche mechanischen Vorrichtungen voraus, dass die zu fügenden Kontaktflächen überhaupt durch die aufgebrachten Kräfte erreicht werden können. Dies ist z. B. dann nicht gegeben, wenn die zu fügenden Kontaktflächen der Körper durch mindestens einen der Körper abgedeckt oder eingehaust sind und eine Kraftaufbringung auf den abdeckenden Körper diesen nachteilig beeinflussen oder gar zerstören würde.

Eine Lösung für dieses Problem wurde mit der Schrift US 6,598,429 B1 vorgeschlagen. Darin werden mehrere zu fügende rotationssymmetrische Körper ineinander gesteckt, wobei der jeweilige Außendurchmesser eines Körpers mit dem Innendurchmesser des nächsten Körpers nahezu übereinstimmt. Die Körper müssen nahezu identische thermische Ausdehnungskoeffizienten und eine sehr hohe Maßgenauigkeit sowie eine geringe Rauhigkeit aufweisen. Die sich berührenden Wandungen der Körper bilden Kontaktflächen. Durch die Erwärmung der Anordnung der Körper werden diese aufgrund auftretender atomarer Austauschvorgänge stoffschlüssig miteinander verbunden, wobei eine Andruckkraft allein aufgrund des sich temperaturabhängig ausdehnenden Materials der Körper bewirkt wird. Mit diesem Verfahren können bevorzugt rotationssymmetrische Körper miteinander stoffschlüssig verbunden werden. Der Querschnitt der erzeugten Baugruppe kann jedoch auch anders als rotationssymmetrisch sein. Die Herstellung und Vorbereitung der zu fügenden Kontaktflächen ist daher sehr zeit-, arbeits- und kostenintensiv. Außerdem ist weder ein stoffschlüssiges Fügen von Materialien unterschiedlicher thermischer Ausdehnungskoeffizienten, noch eine Steuerung der Andruckkräfte während der Dauer des Fügeprozesses möglich.

Mit der Schrift DD 129 413 wird ein Verfahren zur Herstellung stoffschlüssiger Verbindungen vorgeschlagen, bei dem ohne das Einbringen von Schichten zwischen die Kontaktflächen der zu fügenden Bauteile (fortan als Körper bezeichnet), insbesondere Glas-Glas, Glas-Glaskeramik und Glaskeramik-Glaskeramik-Verbindungen, hergestellt werden können. Dazu werden die Körper entlang ihrer Kontaktflächen unmittelbar miteinander in Berührung gebracht und nachfolgend unter Vakuum oder einer Schutzgasatmosphäre bei einer Temperatur oder in einem Temperaturintervall unterhalb des Transformationspunktes der Gläser bzw. des Erweichungspunktes der Glaskeramiken mit einer im Wesentlichen senkrecht auf die Kontaktflächen wirkenden Andruckkraft belastet. Die stoffschlüssige Verbindung wird durch den Austausch von Ionen zwischen den Körpern hergestellt. Dieser Vorgang kann durch Anlegen eines elektrischen Feldes unterstützt werden.

Durch die Offenbarung der Schrift DD 129 413 wird eine grundsätzlich mögliche Verfahrensweise zur Herstellung stoffschlüssiger Verbindungen für eine Reihe potenzieller Anwendungen und Materialien angegeben. Die DD 129 413 gibt jedoch keinerlei Hinweise auf die Art und Weise darauf, wie die Andruckkraft sowohl hinsichtlich ihres Betrages als auch hinsichtlich ihrer Richtung auf die Kontaktflächen aufgebracht und kontrolliert werden kann. Auch dieses Verfahren erfordert eine Oberflächenbearbeitung und -behandlung der Kontaktflächen z.B. durch Polieren. Darüber hinaus erfordert die Bauteilvorbereitung eine sehr hohe Parallelität der zu fügenden Flächen, was insbesondere bei großen Bauteilabmessungen nur mit einem erheblichen technischen Aufwand erreicht werden kann.

Es sind weiterhin aus den Schriften US 4,188,201 und GB 2 264 719 A1 Verfahren bekannt, in denen zwischen pulvrigen Stoffen und Körperoberflächen unter Zuhilfenahme von Fliehkräften stoffschlüssige Verbindungen hergestellt werden.

Keines dieser Verfahren ist jedoch geeignet, definierte Körper entlang vorbestimmter Kontaktflächen stoffschlüssig zu verbinden. Aus dem bekannten Stand der Technik ist weiterhin nicht zu entnehmen, wie komplex geformte und/oder verdeckte Kontaktflächen so mit einer Andruckkraft zu beaufschlagen sind, dass eine stoffschlüssige Verbindung über die Kontaktflächen in steuerbarer Art und Weise ermöglicht wird.

Der Erfindung liegt daher die Aufgabe zugrunde, eine Möglichkeit vorzuschlagen, mit der unter Vermeidung der Nachteile des Standes der Technik eine steuerbare Andruckkraft auf Kontaktflächen stoffschlüssig zu fügender Körper aufgebracht werden kann.

Diese Aufgabe wird durch ein Verfahren zur Herstellung einer stoffschlüssigen Verbindung zwischen mindestens zwei Körpern gelöst, bei dem die Körper jeweils wenigstens eine Kontaktfläche aufweisen und die Körper zueinander ausgerichtet und entlang der Kontaktflächen in Kontakt gebracht werden, um eine Baugruppe zu bilden. Die in Kontakt stehenden Körper werden zueinander fixiert und in einer vorbestimmten Relativlage mit einem senkrechten Achsabstand zu einer ersten Rotationsachse angeordnet werden und bei einer vorgegebenen Temperatur mit einer einstellbaren und über eine vorgegebene Prozessdauer vorgegebenen Rotationsgeschwindigkeit um eine erste Rotationsachse rotiert, wodurch eine auf die Körper wirkende Fliehkraft erzeugt wird, die wenigstens anteilig als Andruckkraft senkrecht auf die Kontaktflächen gerichtet wirkt.

Der Kern der Erfindung liegt in der gezielten Nutzung von Fliehkräften zur berührungslosen und spannungsarmen Einbringung von Andruckkräften auf zu fügende Kontaktflächen.

Körper im Sinne dieser Erfindung sind jegliche feste Gebilde mit bestimmten Abmessungen. Sie können aus einem reinen Stoff, aus Verbunden, Mischungen oder Legierungen von Stoffen bestehen. Nachfolgend werden alle möglichen stofflichen Zusammensetzungen unter dem Begriff des Materials subsummiert. Zueinander artfremde Materialien sind solche Materialien, deren Zusammensetzung nicht identisch ist. Es können daher z.B. auch Körper aus Gläsern unterschiedlicher Glasqualitäten oder verschiedene Legierungen eines Metalls zueinander artfremd sein. Mit dem erfindungsgemäßen Verfahren ist das Fügen von Körpern aus sowohl artgleichen als auch artfremden Materialien möglich.

Die Kontaktflächen der zu fügenden Körper können sowohl zwei- als auch dreidimensionale Ausdehnungen aufweisen.

Bei einer Rotation eines massebehafteten Körpers tritt, wie bei jeder anderen nichtlinearen Bewegung auch, eine von der Rotationsachse radial nach außen gerichtete Fliehkraft auf. Der Betrag der Fliehkraft bestimmt sich dabei aus der Rotationsgeschwindigkeit, der Masse des Körpers sowie seinem radialen Abstand von der Rotationsachse.
Die Fliehkraft greift dabei an jedem Massepunkt des Körpers und damit über den ganzen Querschnitt des Körpers an und kann daher als Flächenkraft bezeichnet werden. Die Aufbringung einer Fliehkraft auf einen Körper kann daher in äußerst vorteilhafter Weise berührungslos, d.h. ohne an dem Körper angreifende mechanische Vorrichtungen erfolgen und spannungsarm, homogen über seinen Querschnitt erfolgen. Berührt der Körper einen anderen Körper über eine Kontaktfläche, wirkt die Fliehkraft über diese Kontaktfläche auf die Kontaktfläche des anderen Körpers.
Die Fliehkraft kann als resultierende Kraft in Form eines Vektors dargestellt und nach Betrag und Richtung in seine Bestandteile zerlegt werden.
Wirkt die Fliehkraft senkrecht zur Kontaktfläche, so sind Betrag und Richtung der Andruckkraft gleich dem Betrag und der Richtung der Fliehkraft. Wirkt die Fliehkraft nicht senkrecht auf die Kontaktfläche, so wirkt ein nach den Regeln der Vektorrechnung zu bestimmender Anteil der Fliehkraft als Andruckkraft senkrecht auf die Kontaktfläche. Ist die Fliehkraft parallel zur Kontaktfläche gerichtet, so ist die Andruckkraft gleich Null.
Bei nicht senkrecht verlaufenden Kontaktflächen wirkt neben der Fliehkraft auch die Gewichtskraft der Körper anteilig auf die Kontaktflächen. Dieser Beitrag zur Andruckkraft ist jedoch bei hohen Rotationsgeschwindigkeiten vernachlässigbar gering.
Die stoffschlüssige Verbindung der Körper entsteht an den Kontaktflächen vorzugsweise durch diffusionsbasierte Austauschvorgänge auf atomarer Ebene.

Die Aufbringung der zum stoffschlüssigen Fügen erforderlichen Andruckkraft als Anteil einer Fliehkraft erlaubt vorteilhaft auch verdeckte oder vollständig eingehauste Kontaktflächen mit einer homogenen Andruckkraft zu beaufschlagen. Zudem ist es bei sehr vielen Kombinationen zu fügender Materialien nicht erforderlich, vor dem Fügen die Kontaktflächen einer intensiven Oberflächenbehandlung wie Polieren oder Läppen zu unterziehen.

Sehr gut polierte Flächen können aber den Vorteil aufweisen, den Kontaktbereich der Flächen zu vergrößern und somit zu einem besseren Verbund zu führen.

Das Verfahren wird vorteilhaft bei Temperaturen durchgeführt, die kleiner der Schmelztemperatur (bei Materialien wie z.B. Metallen, Legierungen) oder kleiner der Erweichungstemperatur (z.B. bei Gläsern oder Glaskeramiken) der Körper ist. Dabei erfolgt das Fügen vorzugsweise bei Temperaturen, bei denen die diffusionsbasierten Austauschvorgänge unterstützt werden, die Körper aber noch keiner nachteiligen Verformung unterliegen. Bei Gläsern ist dies vorteilhaft um und oberhalb der Transformationstemperatur, jedoch unterhalb der Erweichungstemperatur gegeben. Um mögliche Verformungen der Körper bei Temperaturen nahe der Schmelz- bzw. Erweichungstemperatur auf ein tolerierbares Maß zu beschränken, können die Körper zueinander fixiert werden, indem sie gemeinsam verkapselt werden.

Um den Fügeprozess an die material-, baugruppen- und verwendungsspezifischen Erfordernisse der herzustellenden Verbindungen anzupassen, kann die Rotationsgeschwindigkeit über die Prozessdauer verändert werden, wodurch der Betrag der Andruckkraft gezielt eingestellt werden kann. So kann beispielsweise die Form und Tiefe derjenigen Zone, in welcher die Austauschvorgänge stattfinden, die sogenannte Fügezone, im Zusammenwirken mit der Temperatur und der Prozessdauer eingestellt werden.

Ferner kann die Temperatur über die Prozessdauer verändert werden. Es ist vorteilhaft, die Verläufe von Temperatur und Rotationsgeschwindigkeiten über die Prozessdauer entsprechend der Materialien, Abmessungen und Anforderungen der zu fügenden Körper aufeinander abzustimmen.

Um komplexe zwei- und dreidimensionale Kontaktflächen zu fügen, kann die Relativlage der Körper, und damit die Relativlage der Kontaktflächen zur ersten Rotationsachse während der Prozessdauer verändert werden. Dadurch können Betrag und/oder Richtung der Andruckkraft eingestellt und auch über komplex gestaltete Kontaktflächen geführt werden. Änderungen der Relativlage sind jedwede Änderung der räumlichen Lage der Kontaktfläche in Bezug auf die erste Rotationsachse und können beispielsweise Kippbewegungen, Rotationsbewegungen um weitere Rotationsachsen oder Kombination dieser Bewegungen sein.

Die Relativlage der Körper kann auch dadurch verändert werden, dass der Achsabstand über die Prozessdauer verändert wird. Dadurch kann der Betrag der Andruckkraft eingestellt werden. Alle Änderungen der Relativlage können auch miteinander in Kombination über die Prozessdauer durchgeführt werden.

Der Achsabstand kann so gewählt sein, dass die erste Rotationsachse durch mindestens einen Körper verlaufend gelegt ist.

Der Verlauf der ersten Rotationsachse muss dabei weder alle Körper noch eine oder mehrere Symmetrieachsen der Körper oder der zu bildenden Baugruppe erfassen. Das Zusammenfallen von erster Rotationsachse und Symmetrieachse der zu bildenden Baugruppe ist jedoch insbesondere dann vorteilhaft, wenn rotationssymmetrische, ineinander gesteckte Körper gefügt werden sollen, deren Kontaktflächen im Wesentlichen parallel zu der ersten Rotationsachse verlaufen.

Die Körper können über ihre Kontaktflächen in unmittelbaren Kontakt gebracht werden, wodurch diffusionsbasierte Austauschvorgänge zwischen den Körpern ermöglicht werden.

Es ist weiterhin möglich, dass vor dem Ausrichten der Körper zueinander ein Hilfsstoff zwischen die Kontaktflächen eingebracht wird, wodurch die Körper in mittelbaren Kontakt gebracht werden. Ein solcher Hilfsstoff kann ein gelartiger, pastöser oder sonstiger viskoser Stoff sein. Er kann aber auch in fester Form z. B. als Beschichtung, Überzug oder Folie vorliegen. (oder aber als eine Folie eingesetzt werden.) Die diffusionsbasierten Austauschvorgänge erfolgen in diesem Fall hauptsächlich zwischen den jeweiligen Kontaktflächen der Körper und dem Hilfsstoff. Adhäsionskräfte zwischen dem Hilfsstoff und den Körpern können als zusätzliche oder aber ausschließliche Kräfte zu einer stoffschlüssigen Verbindung führen.

Es ist ebenfalls möglich, dass über die Kontaktflächen sowohl Bereiche mit unmittelbarem Kontakt als auch Bereiche mit mittelbarem Kontakt zwischen den Körpern vorhanden sind. Dies wäre insbesondere bei dreidimensional gestalteten Kontaktflächen günstig, bei denen z.B. nur die in einer Richtung orientierten Kontaktflächen mittels eines Hilfsstoffes verbunden werden sollen.

Das erfindungsgemäße Verfahren kann vorteilhaft unter Verwendung von Schutzgas oder einer Schutzatmosphäre durchgeführt werden. Dabei ist der Einsatz inerter Schutzgase dann vorteilhaft, wenn die zu fügenden Körper aus Materialien bestehen, die insbesondere bei höheren Temperaturen zu nachteiligen chemischen Reaktionen wie Oxidation oder Aufnahme unerwünschter Verbindungen aus der Umgebung neigen. Den Schutzgasen oder der Schutzatmosphäre können auch Zusätze beigefügt werden, welche das stoffschlüssige Fügen unterstützen. Es ist ferner im Rahmen der Erfindung liegend, wenn das Verfahren unter vorbestimmten Umgebungs- und Partialdrücken der anwesenden Schutzgase durchgeführt wird. Das Verfahren kann auch unter Vakuum oder vakuumähnlichen Bedingungen durchgeführt werden.

Das Verfahren kann zum Verbinden von ineinander fügbaren, rotationssymmetrischen oder nicht-rotationssymmetrischen Körpern verwendet werden, wobei die erste Rotationsachse in die Symmetrieachse der Körper gelegt wird.
Es eignet sich weiterhin zur Verbindung von aus zueinander artfremden Materialien bestehenden Körpern und zur Verbindung von Körpern mit dreidimensional geformten Kontaktflächen. Die Erfindung kann weiterhin zum Verbinden von Körpern, von denen mindestens einer an seiner Kontaktfläche anorganisches oder organisches Glas aufweist, verwendet werden.

Die Aufgabe wird weiterhin durch eine Vorrichtung zur Herstellung einer stoffschlüssigen Verbindung zwischen mindestens zwei Körpern, die jeweils mindestens eine Kontaktfläche aufweisen, über die die Körper miteinander verbunden werden sollen, gelöst. Die Vorrichtung umfasst eine Aufnahmeeinrichtung zur Aufnahme der zueinander ausgerichteten Körper, wobei die Aufnahmeeinrichtung so ausgeführt ist, dass die von ihr aufgenommenen Körper in der Aufnahmeeinrichtung zueinander fixiert werden und die Aufnahmeeinrichtung in einer vorgegebenen Relativlage mit einem senkrechten Achsabstand zu einer ersten Rotationsachse angeordnet ist und mit einer vorgegebenen Rotationsgeschwindigkeit über eine vorgegebene Prozessdauer um die erste Rotationsachse rotierbar ist.

Als Aufnahmeeinrichtung kann jede Einrichtung dienen, in der die zu fügenden Körper zueinander ausgerichtet und in dieser Ausrichtung zueinander fixierbar sind. Die Aufnahmeeinrichtung kann ein- oder mehrteilig ausgeführt sein. Die Wandungen der Aufnahmeeinrichtung sind hinsichtlich ihres Materials so beschaffen, dass die Körper über die Prozessdauer keine Verbindungen mit dem Material der Aufnahmeeinrichtung eingehen. Zusätzlich können auch Trennmittel zwischen Aufnahmeeinrichtung und Körper zur besseren Entformbarkeit der gefügten Körper vorgesehen werden.

Es ist vorteilhaft, wenn Mittel zur Einstellung einer Temperatur der Aufnahmeeinrichtung vorhanden sind. Solche Mittel können alle bekannten Heizungen oder Wärmetauscher sein, wobei die Temperaturen durch Wärmeleitung, Wärmeübertragung und/oder durch Strahlung eingestellt werden können. Es ist weiterhin vorteilhaft, wenn die Mittel so ausgebildet sind, dass die Temperatur über die Prozessdauer über einen vorbestimmten Temperaturgradienten geführt werden kann.

Die Vorrichtung kann so ausgebildet sein, dass die Aufnahmeeinrichtung zu der ersten Rotationsachse verkippbar ist, wodurch der Anteil der Fliehkraft, der als Andruckkraft auf die Kontaktzone wirkt, verändert werden kann. Durch eine Verkippung sind Betrag und/oder Richtung der Andruckkraft veränderbar.

Die Vorrichtung kann weiterhin so gestaltet sein, dass die Aufnahmeeinrichtung zusätzlich um eine zweite Rotationsachse rotierbar ist. Diese zweite Rotationsachse kann innerhalb oder außerhalb mindestens einer der Körper liegen und gegenüber der ersten Rotationsachse beliebig geneigt sein. Die Aufnahmeeinrichtung kann aktiv oder passiv um die zweite Rotationsachse rotierbar ausgeführt sein. Bei einer passiven Ausführung ist die Aufnahmeeinrichtung so zu der ersten und zweiten Rotationsachse angeordnet, dass die Rotation um die zweite Rotationsachse aufgrund der Massenträgheit der um die erste Rotationsachse rotierenden Aufnahmeeinrichtung verursacht wird.
Die Vorrichtung kann daneben oder alleinig auch Mittel für einen aktiven Antrieb der Aufnahmeeinrichtung um die zweite Rotationsachse aufweisen.

Eine Ausführung der Vorrichtung, bei der die Aufnahmeeinrichtung so ausgeführt ist, dass die Körper in ihr eingekapselt sind, ist insbesondere dann vorteilhaft, wenn die Temperaturen nahe der Schmelz- bzw. Erweichungstemperatur der Körper eingestellt sind. Dabei ist die Aufnahmeeinrichtung so gestaltet, dass die eingekapselten Körper von der inneren Wandung der Aufnahmeeinrichtung in alle Richtungen weitestgehend an einer Verformung gehindert werden.

Es ist weiterhin eine vorteilhafte Ausführung, wenn mehrere Aufnahmeeinrichtungen übereinander gestapelt werden und dadurch die Anzahl der mit gleichen Anforderungen an die Fügequalität zu fügenden und parallel prozessierbaren Körper gesteigert werden kann.

Die Erfindung wird nachfolgend anhand von Ausführungsbeispielen und Zeichnungen näher erläutert. Dabei zeigen
- Fig. 1: eine perspektivische Darstellung einer ersten Ausführung der erfindungsgemäßen Vorrichtung,
- Fig. 2: eine schematische Darstellung einer zweiten Ausführung der Vorrichtung in der Draufsicht,
- Fig. 3: eine Darstellung einer dritten Ausführung der Vorrichtung mit beweglich aufgehängten Aufnahmeeinrichtungen und
- Fig. 4: eine schematische Darstellung einer vierten Ausführung der Vorrichtung in der Draufsicht.

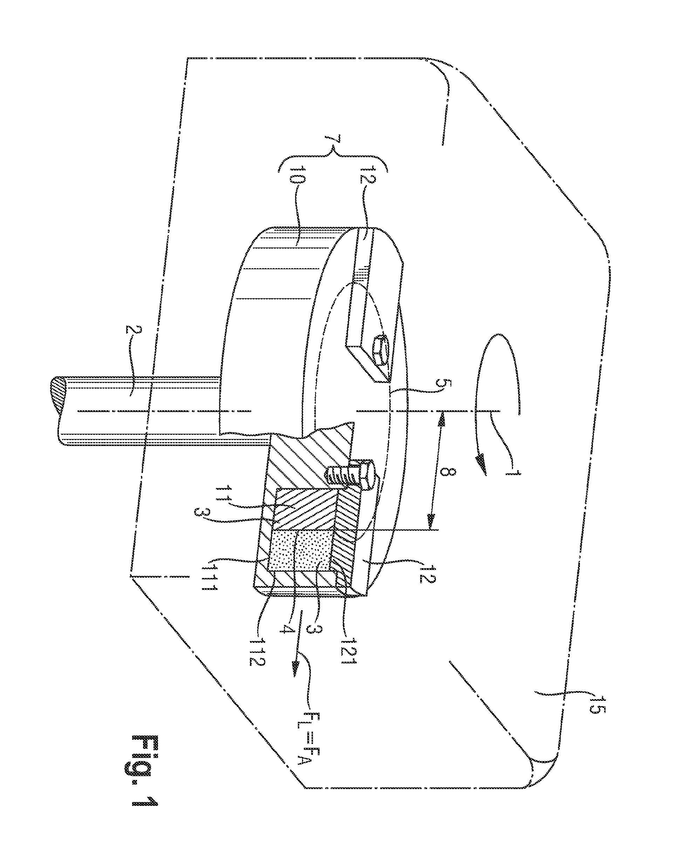

Als wesentliche Elemente einer ersten Ausführung der Vorrichtung gemäß Fig.1 sind eine Rotorwelle 2, deren Symmetrieachse zugleich eine erste Rotationsachse 1 ist, ein Drehteller 10 mit Ausnehmungen 11 und zu fügende quaderförmige Körper 3 gezeigt, von denen jeweils zwei in einer Ausnehmung 11 zueinander ausgerichtet angeordnet sind.

Die an dem Drehteller 10 angesetzte Rotorwelle 2 steht mit einem Antrieb und einer Steuerung (beide nicht gezeigt) in Verbindung und ist um die senkrechte erste Rotationsachse 1 rotierbar. Der Drehteller 10 selbst stellt die Aufnahmeeinrichtung 7 dar, die mit einer Vielzahl von in einem gleichen senkrechten Achsabstand 8 zur Drehtellerachse ausgebildeten Ausnehmungen 11 ausgebildet ist und bei der die Drehtellerachse gleich der ersten Rotationsachse 1 ist.

Die Ausnehmungen 11 weisen einen Boden 111 auf und sind umlaufend von, durch den Drehteller 10 gebildeten, Wandungen 112 begrenzt. Die Abmaße der Ausnehmungen 11 sind so gestaltet, dass die Körper 3 spielarm in die Ausnehmungen 11 eingebracht und aus diesen wieder entfernt werden können. Die Ausnehmungen 11 sind durch Abdeckungen 12 verschließbar, wobei diese mit dem Drehteller 10 verschraubbar sind. Die Abdeckungen 12 besitzen je einen in die Ausnehmungen 11 hineinweisenden Vorsprung 121, um die dort vorhandenen Körper 3 in vertikaler Richtung zu fixieren. Die fixierende Wirkung kann auch durch flexible Elemente wie Federn oder Festkörpergelenke unterstützt werden.

In weiteren Ausgestaltungen der Vorrichtung kann die Begrenzung nicht durch die Wandungen 112, sondern z.B. von in den Drehteller 10 eingesetzten Buchsen gebildet sein. Die Ausnehmungen 11 können auch ohne Abdeckung 12 oder aber mit andersartigen Abdeckungen 12 ausgeführt sein, die zudem nicht oder anders als durch eine Verschraubung mit dem Drehteller 10 verbindbar sind. Die Anzahl und Anordnung der Ausnehmungen 11 kann in weiteren Ausführungen ebenfalls anders gestaltet sein. Es können mehrere Drehteller 10 auf einer ersten Rotationsachse 1 angeordnet sein.

Die Körper 3 berühren sich unmittelbar entlang ihrer Kontaktflächen 4, welche sich parallel zur ersten Rotationsachse 1 erstrecken.

Der Drehteller 10 sowie ein oberes Teilstück der Rotorwelle 2 sind in einem Raum 15 angeordnet, der mit Mitteln zur Einstellung einer Temperatur sowie Mitteln zur Kontrolle und Steuerung der Temperatur verbunden ist. Ein solcher Raum 15 kann ein Ofen oder ein anderer, gesteuert beheizbarer Raum 15 sein. Die Mittel zur Einstellung einer Temperatur sind so ausgelegt, dass eine Temperatur an den Körpern 3 und ihren Kontaktflächen 4 über mindestens die Prozessdauer einstellbar ist.

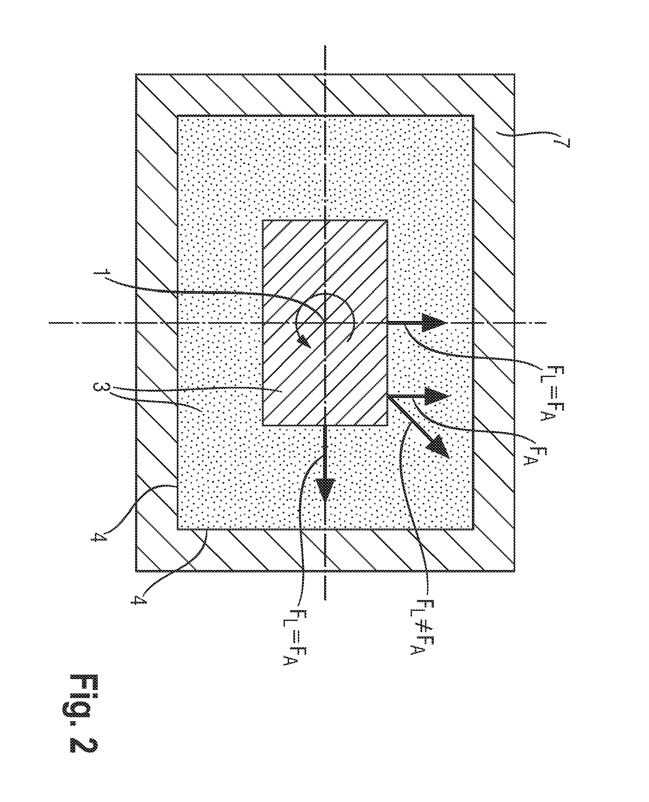

In einem zweiten Ausführungsbeispiel gemäß Fig. 2 verläuft die erste Rotationsachse 1 durch zwei ineinander gesteckte Körper 3 mit rechteckigem Querschnitt, die sich mit ihren parallel zur ersten Rotationsachse 1 verlaufenden Kontaktflächen 4 berühren. Die erste Rotationsachse 1 fällt sowohl mit einer Symmetrieachse der Körper 3 als auch mit einer Symmetrieachse einer aus den Körpern 3 herzustellenden Baugruppe zusammen.
Bei Rotation der Körper 3 um die erste Rotationsachse 1 wirkt in unterschiedlichen Punkten der Kontaktflächen 4 in Abhängigkeit von der jeweiligen Winkellage zwischen der Flächennormalen in dem betreffenden Punkt und der Senkrechten auf die erste Rotationsachse 1 eine unterschiedliche Komponente der Fliehkraft F_{L} als Andruckkraft F_{A}.
Da auch die Achsabstände 8 (nicht eingezeichnet) der einzelnen Punkte der Kontaktflächen 4 unterschiedlich sind, ist auch der Betrag der Fliehkraft F_{L} in den verschiedenen Punkten unterschiedlich.

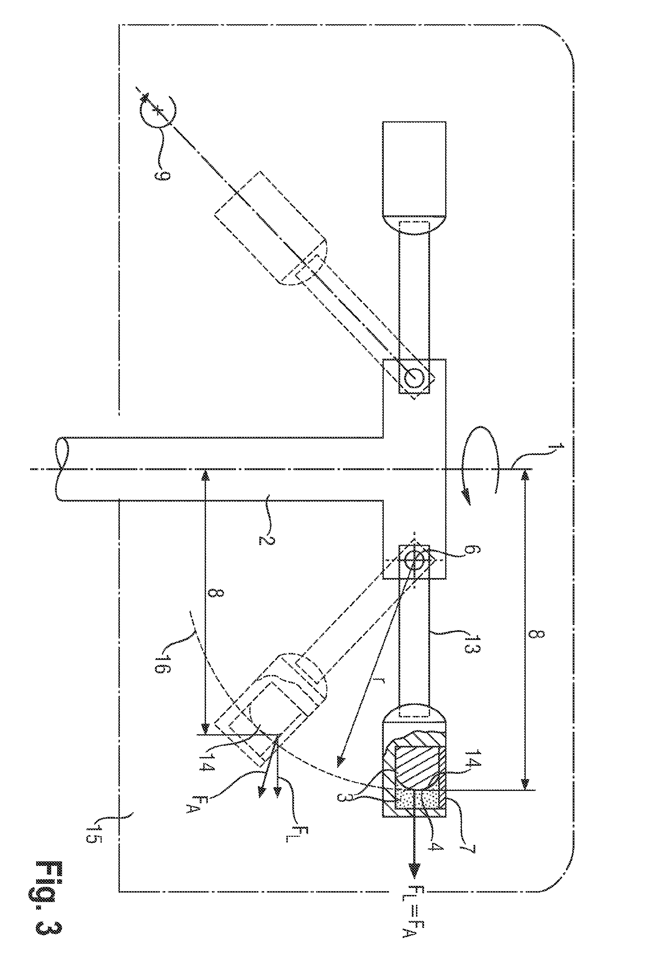

In einer Ausführung der Vorrichtung gemäß Fig. 3 ist die Aufnahmeeinrichtung 7 über eine Aufhängung 13 an einem Gelenkpunkt 6 an einer rotationssymmetrisch um die erste Rotationsachse 1 angeordneten Rotorwelle 2 befestigt, wodurch die Relativlage der Körper 3, und damit die Relativlage der Kontaktflächen 4, zur ersten Rotationsachse 1 während der Prozessdauer abhängig von der Rotationsgeschwindigkeit, und der Betrag der Fliehkraft F_{L} abhängig von der Rotationsgeschwindigkeit und dem Achsabstand 8 zwischen Kontaktflächen 4 und erster Rotationsachse 1 ist. Die Körper 3 sind eine radial innen angeordnete Zylinderlinse und eine radial außen angeordnete Linse mit einer zur Wölbung der Zylinderlinse korrespondierenden konkaven Kontaktfläche 4, die aus Gläsern unterschiedlicher Glasqualität bestehen. Die Kontaktflächen 4 sind als dreidimensionale Flächen ausgebildet, die sich tangential zu einer durch den Achsabstand 8 gegebenen Radius r bestimmten Kreisbahn 5 erstrecken und in dazu senkrechter Richtung gewölbte sind. Die Körper 3 sind in der Aufnahmeeinrichtung 7 gekapselt. Zwischen den Körpern 3 ist über die Ausdehnung der Kontaktflächen 4 ein zu den Körpern 3 adhäsiver Hilfsstoff 14 vorhanden. Die Vorrichtung befindet sich in einem Raum 15.
Die Relativlage der Aufnahmeeinrichtung 7 verändert sich mit zunehmender Rotationsgeschwindigkeit so, dass die Aufnahmeeinrichtung 7 immer mehr in eine waagerechte Rotationsebene eingeschwenkt wird. Die Änderung der Relativlage der Aufnahmeeinrichtung 7 erfolgt auf einer Bahn 16, die sich aus dem Abstand zwischen Gelenkpunkt 6 und Aufnahmeeinrichtung 7 bestimmt.
Der Krümmungsradius der Kontaktflächen 4 ist im Ausführungsbeispiel von dem Krümmungsradius der Bahn 16 verschieden.

Gezeigt sind zwei Zustände:
Bei einer mittleren Rotationsgeschwindigkeit sind die Aufnahmeeinrichtungen 7 (gestrichelt) unter einem Winkel von etwa 45° zur ersten Rotationsachse 1 geneigt. Die maximale Fliehkraft F_{L} greift in einem Punkt der Kontaktflächen 4 mit dem größten Achsabstand 8 an. Dieser Punkt befindet sich nicht in der Mitte der Kontaktflächen 4. In Abhängigkeit von der jeweiligen Winkellage zwischen der Flächennormalen in dem betreffenden Punkt und der Senkrechten auf die erste Rotationsachse 1 wirkt eine unterschiedliche Komponente der Fliehkraft F_{L} als Andruckkraft F_{A}. Die Richtung der maximalen Fliehkraft F_{L} ist von der Richtung der Flächennormalen in diesem Punkt verschieden, so dass die Fliehkraft F_{L} ungleich der Andruckkraft F_{A} ist.

Bei einer hohen Rotationsgeschwindigkeit rotieren die Aufnahmeeinrichtungen 7 in einer waagerechten Rotationsebene um die erste Rotationsachse 1. Die maximale Fliehkraft F_{L}, deren Betrag (illustriert durch die Länge des Vektors) sich aufgrund des zunehmenden senkrechten Achsabstandes 8 vergrößert hat, greift nun in einem Punkt in der Mitte der Kontaktflächen 4 an. Die Richtung und der Betrag der maximalen Fliehkraft F_{L} in diesem Punkt sind gleich der Richtung und dem Betrag der Andruckkraft F_{A}. Durch eine periodische Änderung der Rotationsgeschwindigkeit kann auch eine schnelle Änderung zwischen den beiden Zuständen während des Fügeprozesses vorgenommen werden.

In weiteren Ausgestaltungen können Einrichtungen vorhanden sein, durch welche die aufsteigende Bewegung verzögert oder beschleunigt wird. Solche Einrichtungen können mechanisch, pneumatisch und/oder hydraulisch sein.

Weiterhin können Einrichtungen zwischen dem Gelenkpunkt 6 und den Körpern 3 vorhanden sein, durch welche zusätzliche Freiheitsgrade für die Bewegung der Aufnahmeeinrichtung 7 geschaffen werden. Dies können beispielsweise einfache Kardangelenke und/oder ansteuer- und einstellbare Gelenke oder Ketten sein.

Es ist ebenfalls möglich, dass die Aufnahmeeinrichtung 7 so an der Aufhängung 13 angeordnet ist, dass die Aufnahmeeinrichtung 7 um eine zweite Rotationsachse 9 rotierbar ist.

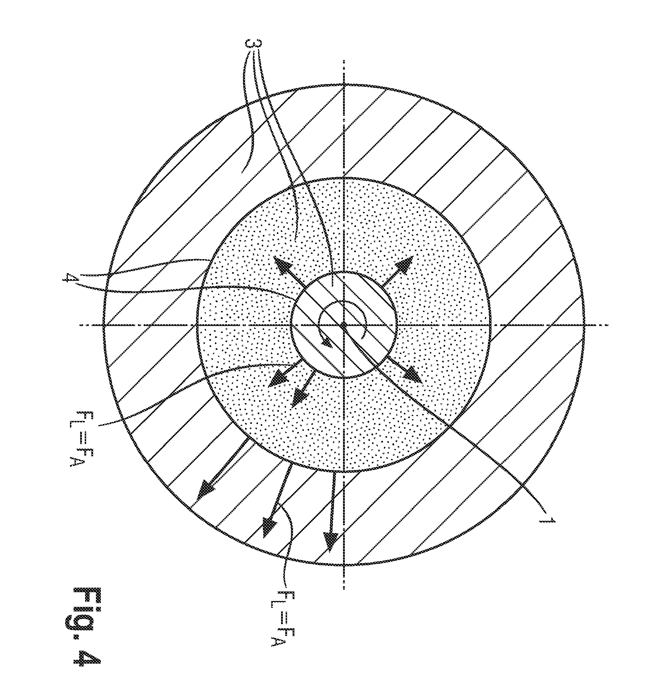

In einem Ausführungsbeispiel gemäß Fig. 4 verläuft die erste Rotationsachse 1 durch drei ineinander gesteckte Körper 3, die sich mit ihren parallel zur ersten Rotationsachse 1 verlaufenden Kontaktflächen 4 berühren. Ein innerer Körper 3 weist eine Kontaktfläche 4 an seiner radial nach außen gerichteten Oberfläche auf. Ein mittlerer Körper 3 besitzt Kontaktflächen 4 sowohl an seiner radial nach innen als auch an seiner radial nach außen gerichteten Oberfläche und der äußere Körper 3 weist an seiner nach radial innen gerichteten Oberfläche eine Kontaktfläche 4 auf. Die erste Rotationsachse 1 fällt sowohl mit einer Symmetrieachse der Körper 3 als auch mit einer Symmetrieachse einer aus den Körpern 3 herzustellenden Baugruppe zusammen.
Bei Rotation der Körper 3 um die erste Rotationsachse 1 wirken in unterschiedlichen Punkten der jeweiligen Kontaktflächen 4 gleichgroße Fliehkräfte F_{L}, die in Betrag und Richtung der Andruckkraft F_{A} in dem jeweiligen Punkt entsprechen (nur jeweils einige Vektoren beispielhaft gezeigt). Der Betrag der Fliehkraft F_{L} wird durch den Achsabstand 8 (nicht eingezeichnet) der Kontaktflächen 4 bestimmt und ist an den Kontaktflächen 4 zwischen innerstem und mittlerem Körper 3 geringer als an den Kontaktflächen 4 zwischen mittlerem und äußerem Körper 3.

Die durch die Fliehkraft F_{L} hervorgerufene Andruckkraft F_{A} wirkt an den jeweiligen Kontaktflächen 4 homogen und flächig.

Eine Anordnung gemäß Fig. 4 ist beispielsweise für die Herstellung von sogenannten GRIN-Linsen (Gradientenindexlinsen) geeignet, wobei die Anzahl der zu fügenden Körper 3 anders als im Ausführungsbeispiel angegeben sein kann. Zudem können die Körper 3 unterschiedliche Dicken und/oder unterschiedliche Eigenschaften besitzen.

Zur Durchführung des erfindungsgemäßen Verfahrens mittels einer Vorrichtung gemäß Fig. 1 werden die zu fügenden Körper 3 in die Ausnehmungen 11 eingesetzt und zueinander ausgerichtet. Anschließend werden die Abdeckungen 12 aufgesetzt und mit dem Drehteller 10 verschraubt. Die Körper 3 sollen in diesem Ausführungsbeispiel aus zueinander artfremden Materialien bestehen, nämlich aus Glas verschiedener stofflicher Zusammensetzungen, was durch die unterschiedlichen Schraffuren verdeutlicht ist.

Ferner kann diese Anordnung aber auch für metallische Verbindungen vorteilhaft eingesetzt werden, die im Inneren einen Körper 3 mit duktiler Beschaffenheit und im äußeren Bereich einen verschleißschutzfesten, härteren Werkstoff erfordern.

Die Temperatur des Raumes 15 wird auf eine Temperatur um den Transformationspunkt der Gläser eingestellt und der Drehteller 10 mit den zu fügenden Körpern 3 mit einer vorgegebenen Rotationsgeschwindigkeit in Rotation um die erste Rotationsachse 1 versetzt, wodurch die Kontaktflächen 4 mit einem Achsabstand 8 auf einer Kreisbahn 5 um die erste Rotationsachse 1 rotieren. Die an dem innerhalb der Kreisbahn 5 angeordneten Körper 3 angreifende Fliehkraft F_{L} presst diesen über die Kontaktflächen 4 gegen den außerhalb der Kreisbahn 5 angeordneten Körper 3. In Abhängigkeit von der jeweiligen Winkellage zwischen der Flächennormalen eines Punktes der Kontaktflächen 4 und der Senkrechten auf die erste Rotationsachse 1 wirkt eine Komponente der Fliehkraft F_{L} als Andruckkraft F_{A} senkrecht auf die Kontaktflächen 4. Die Körper 3 werden z. B. über eine Dauer von 5-15 h bei einer Rotationsgeschwindigkeit von 20-100 rad/s und einem Achsabstand 8 von 10-300 mm prozessiert. Die Prozessbedingungen wurden empirisch für die verwendeten Materialien und gewünschten Eigenschaften der herzustellenden Baugruppe ermittelt.

Die Erfindung erlaubt die Herstellung stoffschlüssiger Verbindungen zwischen Körpern 3 einer Vielzahl verschiedener Materialien, wobei die benötigte Andruckkraft F_{A} in sehr homogener Weise und völlig berührungsfrei auf die zu fügenden Kontaktflächen 4 aufgebracht wird. Dies erlaubt ein sehr spannungsarmes Fügen zu fertigen Produkten oder zu Halbzeugen in der Produktion optischer Baugruppen, keramischer Erzeugnisse aber auch in der Halbleiterindustrie und für die Herstellung von Materialverbünden wie Bimetallen und verschleißfesten, hochbeanspruchten Bauteilen. Das Verfahren ist daneben insbesondere für die Herstellung solcher optischer Baugruppen geeignet, deren optische Eigenschaften über die gefügten Körper 3 hinweg einen Gradienten aufweisen, wie dies z.B. bei GRIN-Linsen der Fall ist. Auch können multifunktionale Bauelemente, wie z. B. Strahlteiler oder Strahlformer als stoffschlüssiger Materialverbund unterschiedlicher Materialien vorteilhaft und mit hohen Qualitätsansprüchen gefertigt werden.

### Bezugszeichen

- 1: erste Rotationsachse
- 2: Rotorwelle
- 3: Körper
- 4: Kontaktfläche
- 5: Kreisbahn
- 6: Gelenkpunkt
- 7: Aufnahmeeinrichtung
- 8: Achsabstand
- 9: zweite Rotationsachse
- 10: Drehteller
- 11: Ausnehmung
- 111: Boden
- 112: Wandung
- 12: Abdeckung
- 121: Vorsprung
- 13: Aufhängung
- 14: Hilfsstoff
- 15: Raum
- 16: Bahn
- r: Radius
- F_{L}: Fliehkraft
- F_{A}: Andruckkraft

## Patentansprüche

1. Verfahren zur Herstellung einer stoffschlüssigen Verbindung zwischen mindestens zwei Körpern (3) mit jeweils wenigstens einer Kontaktfläche (4), bei dem die Körper (3) zueinander ausgerichtet und entlang der Kontaktflächen (4) in Kontakt gebracht werden um eine Baugruppe zu bilden und bei einer vorgegebenen Temperatur auf die Kontaktflächen (4) eine senkrecht gerichtete Andruckkraft (F_{A}) einwirkt, **dadurch gekennzeichnet, dass** die miteinander in Kontakt stehenden Körper (3) zueinander fixiert und in einer vorbestimmten Relativlage mit einem senkrechten Achsabstand (8) zu einer ersten Rotationsachse (1) angeordnet werden und
dass die Körper (3) mit einer einstellbaren und über eine vorgegebene Prozessdauer vorgegebenen Rotationsgeschwindigkeit um die erste Rotationsachse (1) rotieren, wodurch eine auf die Körper (3) wirkende Fliehkraft (F_{L}) erzeugt wird, die wenigstens anteilig als Andruckkraft (F_{A}) auf die Kontaktflächen (4) wirkt.

2. Verfahren nach Anspruch 1, **dadurch gekennzeichnet, dass** die Temperatur kleiner der Schmelztemperatur oder kleiner der Erweichungstemperatur der Körper (3) ist.

3. Verfahren nach Anspruch 1, **dadurch gekennzeichnet, dass** die Rotationsgeschwindigkeit über die Prozessdauer verändert wird.

4. Verfahren nach Anspruch 1, **dadurch gekennzeichnet, dass** die Temperatur über die Prozessdauer verändert wird.

5. Verfahren nach einem der vorhergehenden Ansprüche, **dadurch gekennzeichnet, dass**
die Relativlage der Körper (3), und damit die Relativlage der Kontaktflächen (4) zur ersten Rotationsachse (1) während der Prozessdauer verändert wird.

6. Verfahren nach Anspruch 5, **dadurch gekennzeichnet, dass** der Achsabstand (8) über die Prozessdauer verändert wird, um die Fliehkraft (F_{L}) zu verändern.

7. Verfahren nach einem der vorhergehenden Ansprüche, **dadurch gekennzeichnet, dass**
die erste Rotationsachse (1) durch mindestens einen Körper (3) verlaufend gelegt ist.

8. Verfahren nach einem der vorhergehenden Ansprüche, **dadurch gekennzeichnet, dass**
die Körper (3) über ihre Kontaktflächen (4) in unmittelbaren Kontakt gebracht werden.

9. Verfahren nach einem der Ansprüche 1 bis 7, **dadurch gekennzeichnet, dass** vor dem Ausrichten der Körper (3) zueinander ein Hilfsstoff (14) zwischen die Kontaktflächen (4) eingebracht wird, wodurch die Körper (3) in mittelbaren Kontakt gebracht werden.

10. Vorrichtung zur Herstellung einer stoffschlüssigen Verbindung zwischen mindestens zwei Körpern (3), die jeweils mindestens eine Kontaktfläche (4) aufweisen, über die die Körper (3) miteinander verbunden werden sollen, umfassend eine Aufnahmeeinrichtung (7) zur Aufnahme der zueinander ausgerichteten Körper (3), **dadurch gekennzeichnet, dass** die Aufnahmeeinrichtung (7) so ausgeführt ist, dass die von ihr aufgenommenen Körper (3) durch die Aufnahmeeinrichtung (7) zueinander fixiert werden, dass
die Aufnahmeeinrichtung (7) in einer vorgegebenen Relativlage mit einem senkrechten Achsabstand (8) zu einer ersten Rotationsachse (1) angeordnet ist und mit einer vorgegebenen Rotationsgeschwindigkeit über eine vorgegebene Prozessdauer um die erste Rotationsachse (1) rotierbar ist.

11. Vorrichtung nach Anspruch 10, **dadurch gekennzeichnet, dass** die Aufnahmeeinrichtung (7) zu der ersten Rotationsachse (1) verkippbar ist, wodurch der Anteil der Fliehkraft (F_{L}), der als Andruckkraft (F_{A}) auf die Kontaktflächen (4) wirkt, verändert werden kann.

12. Vorrichtung nach Anspruch 10 oder 11, **dadurch gekennzeichnet, dass** die Aufnahmeeinrichtung (7) zusätzlich um eine zweite Rotationsachse (9) rotierbar ist.

13. Vorrichtung nach einem der Ansprüche 10 bis 12, **dadurch gekennzeichnet,**
**dass**
die Aufnahmeeinrichtung (7) so ausgeführt ist, dass die Körper (3) in ihr eingekapselt sind.

14. Vorrichtung nach einem der Ansprüche 10 bis 13, **dadurch gekennzeichnet,**
**dass**
die Aufnahmeeinrichtung (7) als ein Drehteller (10) mit einer Vielzahl von in einem gleichen Abstand zur Drehtellerachse ausgebildeten Ausnehmungen (11) ausgebildet ist und die Drehtellerachse gleich der ersten Rotationsachse (1) ist.

15. Vorrichtung nach einem der Ansprüche 10 bis 14, **dadurch gekennzeichnet,**
**dass**
die Aufnahmeeinrichtung (7) mit einer Aufhängung (13) in einem Gelenkpunkt (6) an einer rotationssymmetrisch um die erste Rotationsachse (1) angeordneten Rotorwelle (2) befestigt ist, wodurch die Relativlage der Körper (3), und damit die Relativlage der Kontaktflächen (4), zur ersten Rotationsachse (1) während der Prozessdauer abhängig von der Rotationsgeschwindigkeit, und der Betrag der Fliehkraft (F_{L}) abhängig von der Rotationsgeschwindigkeit und dem Achsabstand (8) zwischen Kontaktflächen (4) und erster Rotationsachse (1) ist.

16. Anwendung des Verfahrens gemäß den Ansprüchen 1 bis 9 zur stoffschlüssigen Verbindung von ineinander fügbaren rotationssymmetrischen und nicht rotationssymmetrischen Körpern (3), wobei die erste Rotationsachse (1) in die Symmetrieachse der Körper (3) gelegt wird.

17. Anwendung des Verfahrens gemäß den Ansprüchen 1 bis 9, zur stoffschlüssigen Verbindung von Körpern (3), von denen mindestens einer an seiner Kontaktfläche (4) anorganisches oder organisches Glas aufweist.

18. Anwendung des Verfahrens gemäß den Ansprüchen 1 bis 9, zur stoffschlüssigen Verbindung von aus zueinander artfremden Materialien bestehenden Körpern (3).

19. Anwendung des Verfahrens gemäß den Ansprüchen 1 bis 9, zur stoffschlüssigen Verbindung von Körpern (3) mit dreidimensional geformten Kontaktflächen (4).
